# EUROPEAN PATENT APPLICATION

(11) **EP 4 042 860 A1**
(43) Date of publication of application: **17.08.2022**
(21) Application number: 22154281.4
(22) Date of filing: 31.01.2022
(51) Int. Cl.: A01G 13/02, A01G 9/24, A01G 9/14

(54) **METHOD OF REPLACING FILM BELOW PIPE RAILS AND A CARRIAGE SUITABLE FOR USE IN THIS METHOD**

(30) Priority: 12.02.2021 NL 2027555
(71) Applicant: F.T. Groep B.V., 6004 HT Weert (NL)
(72) Inventor: NIES, Henricus Wilhelmus Gerardus Mattheus, 6034 RA Nederweert-Eind (NL)
(74) Representative: Janssen, Paulus J. P.

(57) **Abstract**

The invention relates to a method of replacing a used film provided as a cover layer on a floor in a greenhouse, on which floor there are pipe rails extending from a first end to a second end, which pipe rails comprise two essentially parallel pipes, the method comprising using a mobile carriage with hoist, lifting the whole pipe rails, and keeping the rails at a height above the floor, then replacing the film and then lowering the pipe rails again using the same mobile carriage. The invention also relates to a mobile carriage for use in this method.

## Description

### FIELD OF THE INVENTION

The invention is in the field of greenhouse management, in particular greenhouses for growing fruit and vegetables, in which greenhouses usually a pipe rails system is provided onto the floor.

### BACKGROUND

In greenhouses, pipe rails are usually provided onto the floor, which pipe rails may be used for heating the greenhouse, but also for displacing robots and other carriages, for example harvest carriages, through the greenhouse. Such pipe rails essentially consist of two parallel pipes extending from a first end of the greenhouse to a second end of this greenhouse (sometimes provided with bends at these ends to obtain continuous pipe rails), which pipe rails are supported on the floor of the greenhouse at a slight height thereof. This causes supports to be located on the floor every 1-2 meters, which supports carry the pipe rails.

This is a good system, but disadvantageous when work needs to be done on the floor, for example replacing used film used in some crop systems or cleaning the floor. The presence of pipe rails supported on the floor causes them to be in the way with this type of work. Therefore, such pipe rails are usually suspended before substantial work is done to the floor surface. Then, the pipe rails are lifted and suspended from so-called A-hooks. Depending on the type of crop, the tough job of suspending the pipe rails regularly recurs, particularly during crop rotation: lifting the pipe rail, to be able to clean the pipes with supports properly, and later on lowering the pipe rails again with the same effort. This is now done with simple manual force and is a labor-intensive operation.

### OBJECT OF THE INVENTION

The object of the invention is to provide a method with which, with a much lower load for the people working in the greenhouse, the same end result may be achieved, preferably within a much shorter time.

### SUMMARY OF THE INVENTION

In order to achieve the object of the invention, a method has been invented comprising:
- positioning a displaceable frame, to which frame a hoist is attached, at a first position above the pipe rails near the first end,
- providing a hoist support engaging the two pipes at laterally opposite positions, which support is operatively connected to the hoist,
- hoisting up the hoist support, and thereby the pipe rails, to a predetermined height,
- providing a first suspended support, which suspended support is attached to a carrier located above the predetermined height to keep the hoisted-up pipe rails suspended at a working height above the floor,
- displacing the frame in the direction of the second end, to a second position, after which the hoist support is provided at the location of this second position such that it again engages the two pipes at laterally opposite positions,
- hoisting up the hoist support, and thereby the pipe rails, to the predetermined height,
- providing a second suspended support, which support is attached to a carrier located above the predetermined height to keep the hoisted-up pipe rails suspended at a working height above the floor,
- displacing the frame in the direction of the second end, to a third position, after which the hoist support is provided at the location of this third position such that it again engages the two pipes at laterally opposite positions,
- hoisting up the hoist support, and thereby the pipe rails, to the predetermined height,
- providing a third suspended support, which support is attached to a carrier located above the predetermined height to keep the hoisted-up pipe rails suspended at a working height above the floor,
- and optionally repeating these steps n times, n being a natural number, until the whole pipe rails are located at the said working height above the floor,
- removing the said used film from the floor,
- providing a new film on this floor,
- after which the frame is again positioned at a position above the pipe rails near one of the two ends,
- providing the hoist support which engages the two pipes at laterally opposite positions,
- hoisting up the hoist support to a height above the working height, until at least one suspended support no longer supports the pipe rails in a load-bearing manner,
- removing this at least one suspended support,
- lowering the hoist support until it no longer supports the pipe rails,
- displacing the frame in the direction of the other end, and repeating providing the hoist support, hoisting up thereof, removing one or more suspended supports, and lowering the hoist support until the whole pipe rails are on the floor again.

Also, a method has been invented where this is designed for cleaning the floor, instead of, or in addition to, replacing a used film covering the floor of the greenhouse.

Further, a mobile carriage, further also called "pipe rail lift," has been invented which is suitable for use in these methods. This mobile carriage comprises an essentially horizontally extending frame to which a hoist is attached, which frame is supported by four essentially vertically extending legs of essentially equal length, which legs are arranged in a quadrangle with a width allowing the carriage to be placed over pipe rails, the legs supporting the frame laterally of the pipe rails, each of the legs being, at its end, provided with a wheel for mobile support of the carriage on a base.

### FURTHER EMBODIMENTS OF THE INVENTION

In a first further embodiment of the method according to the invention, the frame comprises an essentially horizontal subframe for positioning above the pipe rails and carrying the hoist, the subframe being supported by two opposite supports supported on the floor left and right of the pipe rails, respectively.

In a further embodiment, each of the two opposite supports is provided with a wheel with which the supports are displaceable over the floor.

In yet a further embodiment, the subframe is provided with two pairs of opposite supports, each pair supporting the subframe.

In another embodiment, the frame is provided with one or more guides guiding the frame upon displacement thereof in the said longitudinal direction relative to the pipe rails so that this frame keeps an essentially constant position in lateral direction above the pipe rails.

In a particular embodiment thereof, the one or more guides engage the top side of at least one of the pipes. More in particular, the one or more guides are, at their distal end, provided with a wheel to engage the top side of the said one of the pipes. In a further preferred embodiment, in which embodiment, on the front and back side of the frame, viewed in said longitudinal direction, guides are provided which each engage both pipes of the pipe rails, the guides are operatively connected to the frame, such that these guides may be brought into a fixed position with respect to the frame, in which position the frame is supported on the pipes.

In yet another embodiment, when lowering the hoist support until it no longer supports the pipe rails, the pipe rails are laterally positioned by laterally pressing them against a temporary stop.

Each of the above-described embodiments corresponds to embodiments of the mobile carriage according to the invention. Thus, for example, there is an embodiment of the mobile carriage where, both on the front side and back side, viewed in the direction of displacement of the carriage, the carriage is provided with a guide for guiding the carriage relative to pipe rails.

Also, there is an embodiment where the two guides are rotatably attached to the carriage, in order to be able to move between a first extreme position where each guide is rotated away from the pipe rails, and a second extreme position where each guide engages the pipe rails. In a particular embodiment thereof, the position of each of the two guides may be fixed between the first and second extreme position with respect to the frame.

More preferably, each of the two guides is, at its distal end, provided with two flange wheels for engaging a pipe.

The invention will now be explained in more detail with reference to the examples below.

### EXAMPLES

Figure 1 is a schematic view of a carriage according to the invention, for use in a method according to the invention.
Figure 2 is a photographic view of the use of the invention in a greenhouse in practice.

### Figure 1

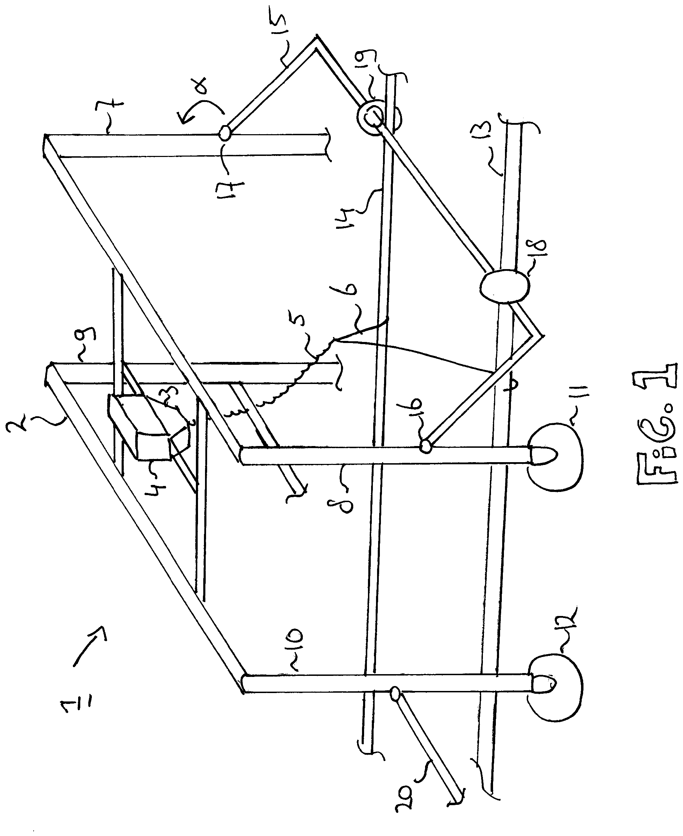

Figure 1 is a schematic view of a carriage 1 according to the invention, for use in a method according to the invention. This carriage is also referred to as a pipe rail lift. The carriage 1 comprises an essentially horizontal subframe 2 to which a hoist 3, also referred to as a winch, is attached in a suspended manner. This hoist is electrically driven. For power supply, a lightweight generator 4 is provided. With the hoist, a cable 5 may be heaved in and driven out, which cable 5 is, at its end, provided with a so-called hoist support 6. Therewith, the pipe rails may be temporarily lifted.

The subframe is supported so as to be mobile by 4 legs 7, 8, 9 and 10 essentially extending vertically, each provided with wheels (the front wheels 12 are so-called swiveling wheels). These legs form two pairs of supports (7, 8) and (9, 10) which support the frame on both sides of the pipes 13 and 14 of the pipe rails on the floor to keep this frame at a fixed position above the pipe rails.

On the back side of the carriage 1, the carriage is provided with an arm 15 serving as a guide with respect to the pipes 13 and 14. To this end, this arm/guide is provided with two flange wheels 18 and 19 which engage the top sides of the pipes 13 and 14 and may follow them when wheeling the carriage 1. On the front side, a same arm/guide 20 is provided which is only partially shown in Figure 1. The guide is rotatably attached to the carriage by means of points of rotation 16 and 17. This allows this arm to move while the indicated angle α may be followed. This allows this arm to move between two extreme positions, a first position where the guide is rotated away from the pipe rails and is supported against the legs 7 and 8, and a second extreme position where the guide engages the pipes 13 and 14 by means of flange wheels 18 and 19. The position of the arm 15 with respect to the frame 2 may be fixed by fixation at the height of the points of rotation 16 and 17. This may be used to let the carriage be supported on the pipes instead of the floor, when the carriage needs to be wheeled but the floor is still dirty or otherwise non-flat such that the resistance against wheeling over the floor is too high.

### Figure 2

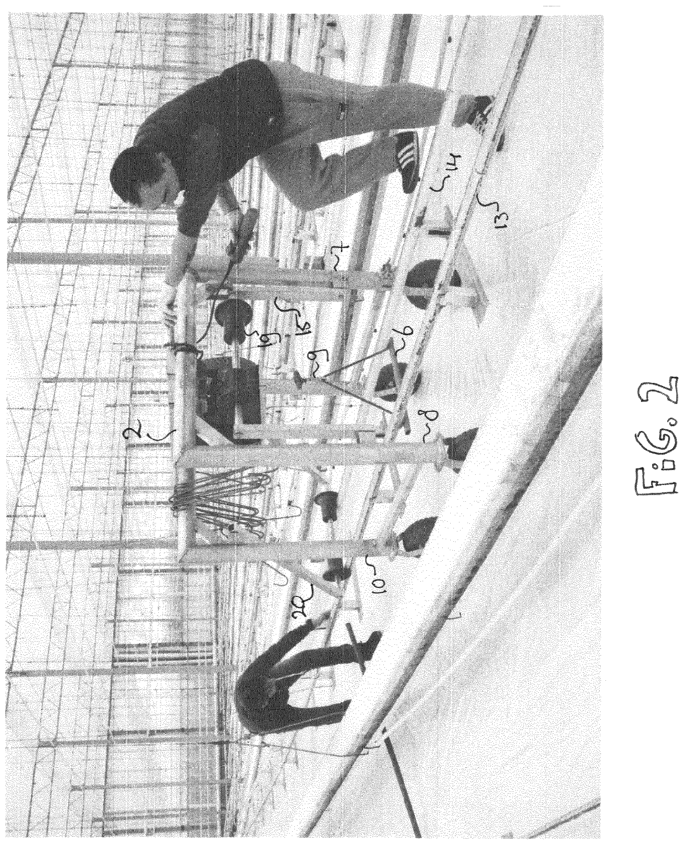

Figure 2 is a photographic view of the use of the invention in a greenhouse in practice. The parts as shown in schematic Figure 1 have the same reference numerals.

### Exemplary method

The operation of the pipe rail lift according to the invention has been described in a publication in the journal Groenten & Fruit, in the issue of February 12, 2020, on pages 24-25 (article: "Buisrail-lift doet het zware tilwerk" (Pipe rail lift does the heavy lifting work)). This publication has been incorporated as a whole in the present application by reference thereto. In short, in this article, it is explained how, with such a pipe rail lift, (heating) pipes of the pipe rails are lifted during crop rotation, being both labor-relieving and labor-saving. The device also lowers them neatly, after cleaning and changing the walking film. Heavy lifting by staff is a thing of the past.

Every year the tough job recurs: lifting the pipe rail during crop rotation, to be able to clean the pipes with supports properly. Later on, the same effort is needed once again to lower it again. This is currently done with simple manual force, usually carried out by the same (strong) people. This means, for example, that, in each 160-meter-long path, two people need to bend their knees seventeen times to lift over 120 kilograms, with a third person then suspending the pipes in the suspension hooks (so-called A-hooks). And this, for example, for a total of 50 kilometers of pipe rail on a 10-hectare-sized business. With the present pipe rail lift, the heating pipes of a hectare of greenhouse may easily be lifted within a day (8 working hours). With three copies of the designed pipe rail lifts (sufficient for a 10-hectare business), in a 3-hectare section (with 4 pipe rails per lattice), the 15.5 kilometers of pipe rail may there be lifted in 20 hours.

For lifting, only one person per pipe rail lift is needed. That pipe rail lift is, on both sides, provided with a guide arm, with two flange rollers thereon underneath which the two pipes of the pipe rails (in this case of a heating loop) guidingly run underneath. This guide ensures the steering direction, so that the carriage on swiveling wheels always neatly keeps following the pipe rail in the longitudinal direction.

With a lift hook/hoist support on a winch, the pipe rail is hoisted up to the desired height, after which the pipes are suspended in an A-hook from a vertical cable. Then, the pipe rail lift rides to the next suspension point, and the actions are repeated. In this embodiment, in each lattice, one of the (four) pipe rail loops temporarily remains on the ground. Then, a spraying robot may ride over it, to properly spray-clean all lifted pipe rails with supports, together with the growing gutters in that lattice. This is a combination of spray-cleaning properly first, and additionally foam-cleaning again. Then, in each lattice, the last pipe rail is lifted, which is cleaned separately with a reel on the concrete path and a lightweight hose. Then, everything is ready to lay the new walking film and then lower the pipe rail again. The above lifting process is carried out in reverse order when neatly lowering, with the difference that a second person is added to each pipe rail lift. Thus, in the same pass, a number of operations may be carried out simultaneously. Otherwise, these would need to be carried out separately afterwards with additional staff.

Firstly, that second person may detach the A-hooks from the cables and suspend the hooks from the pipe rail lifter, so that they directly go along to the concrete path. Secondly, he/she places a horizontal temporary spacer. On the one side, it contacts the preceding pipe rail - already laid completely straight properly. On the other side, it pushes the pipes (lying in the pipe rail lift) against the spacer, when those pipes nearly touch the ground. This causes all pipes to lie dead straight in the longitudinal direction directly during lowering on the walking film for the last bit. Previously, with manual lifting and lowering, during the growing, someone had to pass by to lay all pipes straight. When the three pipe rail lifts have done their job, someone rides on a scissor trolley over the laid pipe rail to remove the temporary suspension cables. This is directly followed by the team who will lay new mats on the growing gutters. Also, the new plugs are put in the trickle hoses again.

The pipe rail lift is, in principle, suitable for any type of pipe rail, but is in practice supplied for the standard 42.5 and 55-centimeter pipe rail size. The winch (hoist), which may lift up to 600 kilograms with its power of 0.6 kW, is driven by a low-noise 1-kWh petrol generator, which also ensures the drive when riding. An LED spotlight ensures that work may also be done in the evening or early in the morning, if desired. The cost price of the pipe rail lift is a one-off investment in something that is annually used for only a very short time. But it yields a great saving in additional working hours and workload.

## Claims

1. Method of replacing a used film provided as a cover layer on a floor in a greenhouse, on which floor there are pipe rails extending from a first end to a second end, which pipe rails comprise two essentially parallel pipes, the method comprising:
- positioning a displaceable frame, to which frame a hoist is attached, at a first position above the pipe rails near the first end,
- providing a hoist support engaging the two pipes at laterally opposite positions, which support is operatively connected to the hoist,
- hoisting up the hoist support, and thereby the pipe rails, to a predetermined height,
- providing a first suspended support, which suspended support is attached to a carrier located above the predetermined height to keep the hoisted-up pipe rails suspended at a working height above the floor,
- displacing the frame in the direction of the second end, to a second position, after which the hoist support is provided at the location of this second position such that it again engages the two pipes at laterally opposite positions,
- hoisting up the hoist support, and thereby the pipe rails, to the predetermined height,
- providing a second suspended support, which support is attached to a carrier located above the predetermined height to keep the hoisted-up pipe rails suspended at a working height above the floor,
- displacing the frame in the direction of the second end, to a third position, after which the hoist support is provided at the location of this third position such that it again engages the two pipes at laterally opposite positions,
- hoisting up the hoist support, and thereby the pipe rails, to the predetermined height,
- providing a third suspended support, which support is attached to a carrier located above the predetermined height to keep the hoisted-up pipe rails suspended at a working height above the floor,
- and optionally repeating these steps n times, wherein n is a natural number, until the whole pipe rails are located at the said working height above the floor,
- removing the said used film from the floor,
- providing a new film on this floor,
- after which the frame is again positioned at a position above the pipe rails near one of the two ends,
- providing the hoist support which engages the two pipes at laterally opposite positions,
- hoisting up the hoist support to a height above the working height, until at least one suspended support no longer supports the pipe rails in a load-bearing manner,
- removing this at least one suspended support,
- lowering the hoist support until it no longer supports the pipe rails,
- displacing the frame in the direction of the other end, and repeating providing the hoist support, hoisting up thereof, removing one or more suspended supports, and lowering the hoist support until the whole pipe rails are on the floor again.

2. Method according to claim 1, **characterized in that** the frame comprises an essentially horizontal subframe for positioning above the pipe rails and carrying the hoist, wherein the subframe is supported by two opposite supports supported on the floor left and right of the pipe rails, respectively.

3. Method according to claim 2, **characterized in that** each of the two opposite supports is provided with a wheel with which the supports are displaceable over the floor.

4. Method according to claim 3, **characterized in that** the subframe is provided with two pairs of opposite supports, wherein each pair supports the subframe.

5. Method according to any one of the preceding claims, **characterized in that** the frame is provided with one or more guides which guide the frame when displacing it in the said longitudinal direction relative to the pipe rails so that this frame keeps an essentially constant position in lateral direction above the pipe rails.

6. Method according to claim 5, **characterized in that** the one or more guides engage the top side of at least one of the pipes.

7. Method according to claim 6, **characterized in that** the one or more guides are, at their distal end, provided with a wheel to engage the top side of the said one of the pipes.

8. Method according to claim 7, wherein, on the front and back side of the frame, viewed in the said longitudinal direction, guides are provided which each engage both pipes of the pipe rails, **characterized in that** the guides are brought into a fixed position with respect to the frame, in which position the frame is supported on the pipes.

9. Method according to any one of the preceding claims, **characterized in that**, when lowering the hoist support until it no longer supports the pipe rails, the pipe rails are positioned laterally by laterally pressing them against a temporary stop.

10. Method according to any one of the preceding claims, **characterized in that** it is used either as an alternative for replacing a used film or additionally for cleaning the floor.

11. Mobile carriage suitable for use in a method according to any one of the preceding claims, wherein this carriage comprises an essentially horizontally extending frame to which a hoist is attached, which frame is supported by four essentially vertically extending legs of essentially equal length, which legs are arranged in a quadrangle with a width allowing the carriage to be placed over pipe rails, wherein the legs support the frame laterally of the pipe rails, wherein each of the legs is, at its end, provided with a wheel for supporting the carriage on a base so as to be mobile.

12. Mobile carriage according to claim 11, **characterized in that** the carriage is, both on the front and back side, viewed in the direction of displacement of the carriage, provided with a guide for guiding the carriage relative to the pipe rails.

13. Mobile carriage according to claim 12, **characterized in that** the two guides are rotatably attached to the carriage, in order to be able to move between a first extreme position wherein each guide is rotated away from the pipe rails, and a second extreme position wherein each guide engages the pipe rails.

14. Mobile carriage according to claim 13, **characterized in that** the position of each of the two guides may be fixed between the first and second extreme position with respect to the frame.

15. Mobile carriage according to claim 14, **characterized in that** each of the two guides is, at its distal end, provided with two flange wheels for engaging a pipe.
